(19) Europäisches Patentamt
European Patent Office
Office européen des brevets

(11) **EP 1 339 177 B1**

(12) **FASCICULE DE BREVET EUROPEEN**

(45) Date de publication et mention
de la délivrance du brevet:
**11.02.2009 Bulletin 2009/07**

(51) Int Cl.:
*H04B 7/10* *(2006.01)*     *H01Q 1/12* *(2006.01)*
*H01Q 21/24* *(2006.01)*     *H01Q 3/02* *(2006.01)*

(21) Numéro de dépôt: **03100396.5**

(22) Date de dépôt: **20.02.2003**

(54) **Système antennaire pour liaisons entre véhicule mobile et objets aériens, procédé correspondant et utilisation du système**

Antennensystem zur Verbindung zwischen einem Fahrzeug und einer Luchtplattform, entsprechendes Verfahren und Systemverwendung

Antenna system for link between vehicle and air platform, corresponding method and use of the system

(84) Etats contractants désignés:
**AT BE BG CH CY CZ DE DK EE ES FI FR GB GR HU IE IT LI LU MC NL PT SE SI SK TR**

(30) Priorité: **22.02.2002 FR 0202300**

(43) Date de publication de la demande:
**27.08.2003 Bulletin 2003/35**

(73) Titulaire: **Thales**
**92200 Neuilly sur Seine (FR)**

(72) Inventeurs:
• **Lamour, Frédéric**
**94117 Arcueil Cedex (FR)**
• **Boutigny, Pierre-Henri**
**94117 Arcueil Cedex (FR)**
• **Elkael, Maurice**
**94117 Arcueil Cedex (FR)**
• **Wolk, Ivan**
**94117 Arcueil Cedex (FR)**

(74) Mandataire: **Lucas, Laurent Jacques et al
Marks & Clerk France
Conseils en Propriété Industrielle
Immeuble " Visium "
22, avenue Aristide Briand
94117 Arcueil Cedex (FR)**

(56) Documents cités:
**US-A- 5 678 171     US-B1- 6 262 659
US-B1- 6 275 187**

## Description

L'invention concerne le domaine des antennes utilisées, notamment, pour assurer les liaisons entre un engin mobile et un objet aérien, ces deux objets ayant des déplacements et des mouvements de faible vitesse.

Dans le cadre des systèmes de télécommunications par satellite ou plus généralement avec un objet aérien ou céleste, on est de plus en plus amené à installer ces systèmes sur des engins mobiles de types aéronefs ou véhicules motorisés (par exemple pour la réception télé, les communications haut débit par satellite, etc.).

Ces systèmes requièrent généralement des antennes à gain élevé qu'il convient de pointer soigneusement vers l'objet afin de garantir une qualité de réception acceptable.

Deux problèmes se posent alors :

> 1 - l'intégration d'antennes à grand gain qui présentent un encombrement relativement important sur des véhicules mobiles (problèmes de discrétion et d'aérodynamique),
> 2 - le pointage qui varie en fonction des mouvements éventuels du véhicule sur lequel est installé l'antenne et où l'on peut observer une dégradation de la qualité de la liaison, voire une rupture de cette dernière.

L'art antérieur propose notamment trois types de solution exposées ci-après.

La première est le dépointage mécanique selon 2 axes. Cette solution est la plus couramment utilisée. Elle consiste à utiliser une antenne directive à faisceau fixe, couplée à un positionneur 2 axes : site sur azimut en général. Les antennes utilisées sont en général des paraboles ou des réseaux de fentes rayonnantes avec distributions en guides qui présentent de très bonnes performances en gain.

Cette solution présente comme avantages d'offrir des performances radioélectriques constantes quelle que soit l'angle de dépointage ; une couverture quasiment de tout l'espace. Ses inconvénients sont liés notamment à l'utilisation d'un positionneur 2 axes qui présente :

> un coût d'achat et de maintenance important avec une fiabilité relative notamment sur aeronefs,
> une intégration délicate, car l'antenne doit être bien dégagée pour pouvoir pointer correctement (problèmes d'aérodynamique pour les avions et de discrétion pour les véhicules terrestres),
> une sensibilité aux vibrations et aux chocs (les contraintes sévères sur la mécanique conduisant à un coût élevé).

La deuxième solution repose sur une méthode de dépointage électronique 2 axes. Dans ce cas, l'antenne est généralement plane et constituée d'un réseau d'éléments rayonnants élémentaires. A chaque élément est associé un module électronique qui permet de faire varier la phase et éventuellement l'amplitude, de façon à générer un faisceau dans les 2 axes du plan de l'antenne avec un certain niveau de lobes secondaires. Plusieurs variantes existent pour ce type d'antennes, par exemple, les antennes actives à modules, reflect-array, transmit-array, etc. Cette solution présente une très bonne précision et une grande rapidité de pointage. Elle présente toutefois certains inconvénients :

> les performances radioélectriques se dégradent rapidement avec l'angle de dépointage du faisceau (baisse de gain, remontée de lobes secondaires,...),
> les solutions sont coûteuses car il y a autant de modules électroniques que d'éléments rayonnants élémentaires avec des commandes et un traitement associé complexe,
> l'antenne ne peut couvrir qu'une portion définie de l'espace (un demi plan maximum) sauf si on la combine avec un positionneur un axe (ex :radars). On cumule alors les coûts qui deviennent très importants, voire prohibitifs dans le cas de liaisons de confort, par exemple pour la réception télévision.

La troisième solution est une solution intermédiaire combinant le dépointage mécanique 1D et le dépointage électrique 1D. On combine un dépointage 1 axe mécanique avec un dépointage 1 axe électrique. De cette façon, on associe une solution mécanique plus simple et moins coûteuse que celle de la première solution, avec une solution électrique plus simple (n modules électroniques au lieu de $n^2$) que celle décrite dans la deuxième solution. Cette troisième solution offre une meilleure fiabilité car les contraintes mécaniques sont réduites, un coût raisonnable car le système est moins complexe mécaniquement qu'un dépointage mécanique 2D et moins complexe radio électriquement qu'un dépointage électrique 2D. Elle conduit par contre à une baisse de performances en fonction du dépointage. De plus, la couverture de l'espace est fortement dépendante des performances en dépointage de l'antenne (angle maximal de dépointage garantissant des performances correctes).

Le brevet US 6 275 187 divulgue un système permettant de diriger le lobe de réception d'un réseau d'antenne adaptatif vers un aéronef en vol qui inclut un calculateur de vecteur de position et un générateur de pondération du vecteur d'antenne.

Le brevet US 5,678,171 divulge un système comportant au moins un dispositif de détermination de la position du mobile et de l'objet aérien, et un ensemble de positionnement de l'antenne double polarisation du mobile.

L'idée de l'invention repose notamment sur une combinaison judicieuse utilisant un dépointage électrique 1D et un dépointage mécanique 1D.

L'invention concerne un système antennaire permettant la liaison entre un objet aérien émettant un signal de polarisation quelconque et un mobile équipé d'une antenne double polarisation, ledit système comportant au moins un dispositif de détermination de la position du mobile et de l'objet aérien et un ensemble de positionnement de ladite antenne. Le système est caractérisé en ce qu'il comporte au moins :

> ➢ un combineur de polarisation recevant deux signaux H et V issus de l'antenne double polarisation les signaux H et V résultant du signal issu de l'objet aérien,
> > le combineur étant adapté à recombiner les signaux H et V afin d'obtenir un signal E optimisant le bilan de liaison entre le mobile et l'objet aérien.

L'ensemble de positionnement de ladite antenne comporte par exemple au moins un positionneur mécanique en liaison avec l'antenne, un bloc de commande des déphaseurs de l'antenne et un dispositif de dépointage de l'antenne.

L'antenne a par exemple une forme circulaire ou rectangulaire et est montée sur un positionneur 1 axe.

L'invention concerne aussi un procédé pour optimiser le bilan de liaison entre une antenne double polarisation associée à un mobile et un objet aérien émettant un signal E de polarisation quelconque comportant une étape où l'on détermine les positions du mobile et de l'objet aérien. Le procédé est caractérisé en ce qu'il comporte au moins les étapes suivantes :

- à partir de la valeur desdites positions, positionner de manière mécanique et électronique l'antenne,
- transmettre les deux signaux H et V issus de l'antenne vers une étape de combinaison adaptée pour produire un signal E correspondant à un bilan liaison optimal entre le mobile et l'objet aérien,
- prélever une partie de ce signal et la comparer à un seuil.

Il peut aussi comporter une étape où la valeur de l'amplitude du signal prélevé est comparée à une valeur seuil et une étape où on repositionne l'antenne si la valeur de l'amplitude est inférieure à une valeur donnée.

Le système de dépointage selon l'invention présente notamment les avantages suivants :

> ➢ Un dépointage mécanique abordable et robuste, un coût raisonnable et une fiabilité honorable,
> ➢ Une solution permettant une intégration discrète,
> ➢ Une optimisation des bilans de liaison entre le véhicule mobile et l'objet aérien en temps réel,
> ➢ Un calibrage de l'antenne non nécessaire, ce qui permet un coût du système abordable,
> ➢ Une souplesse de la configuration des voies de sortie, avec la possibilité de plusieurs types de combineurs.

D'autres caractéristiques et avantages de l'objet de l'invention apparaîtront mieux à la lecture de la description qui suit donnée à titre illustratif et nullement limitatif au regard des figures annexées qui représentent :

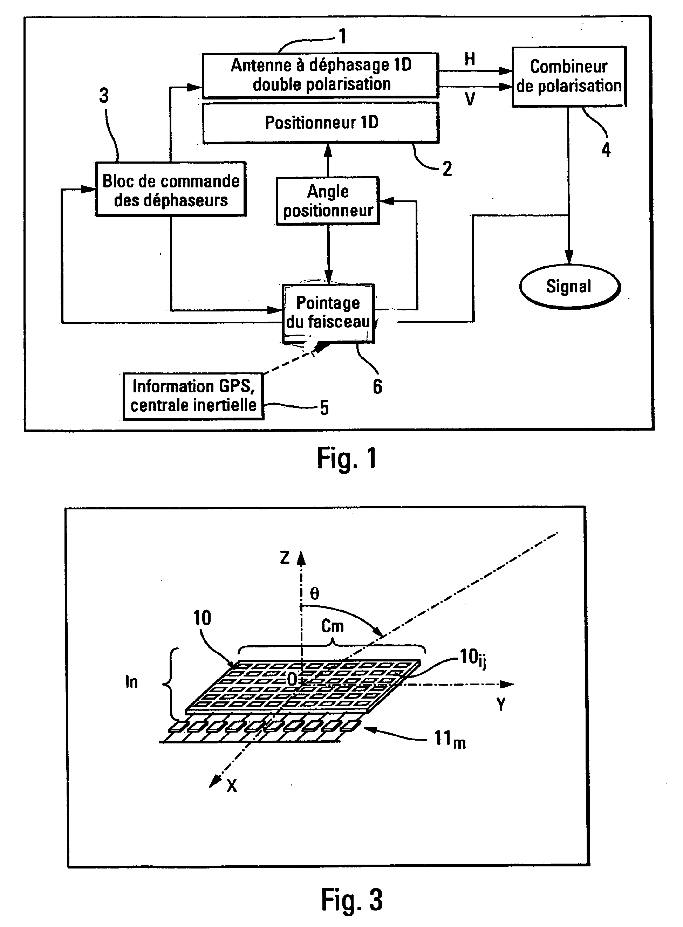

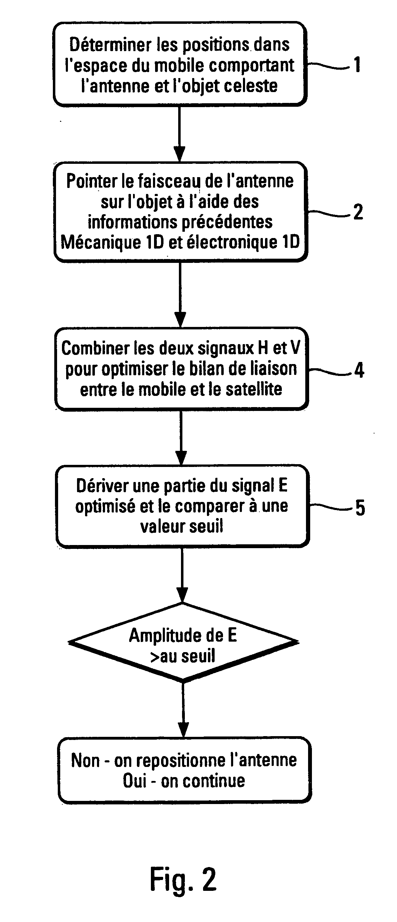

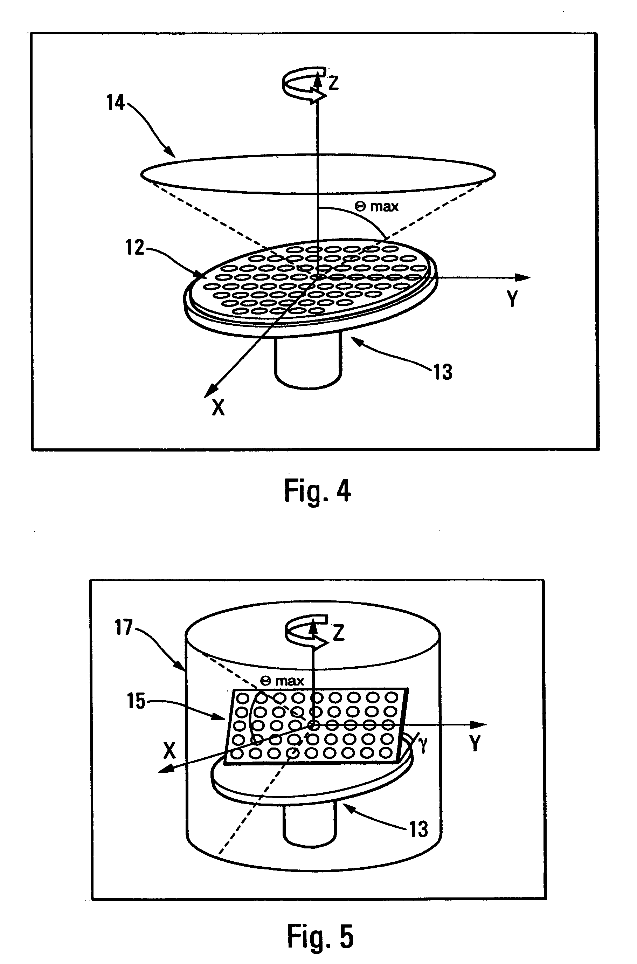

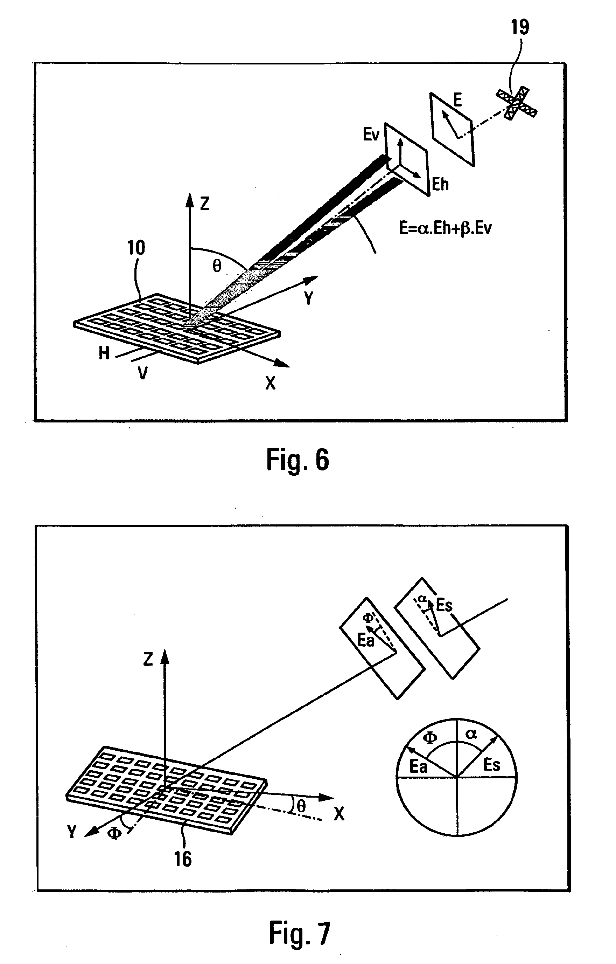

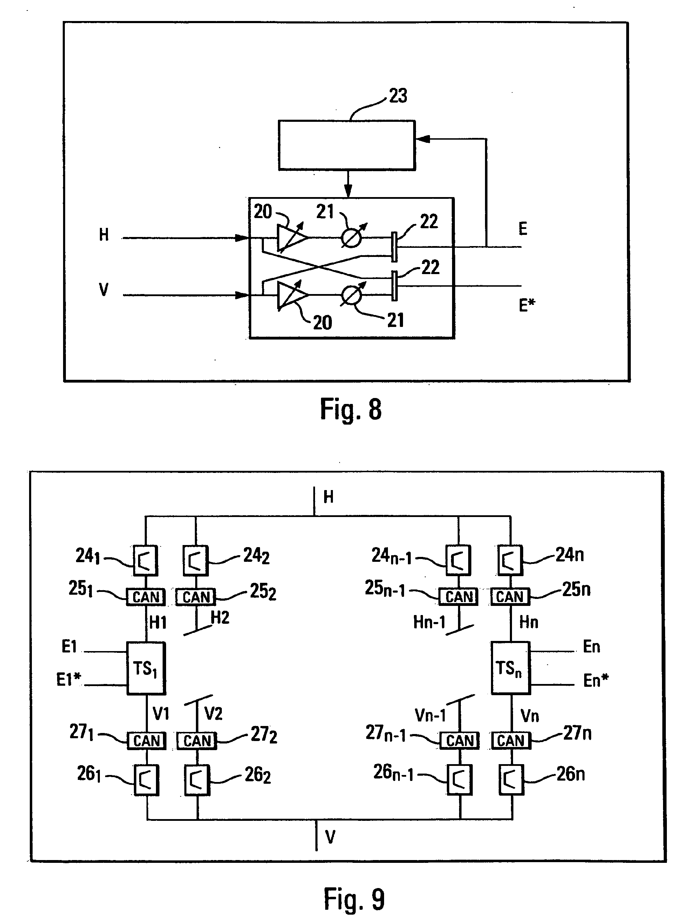

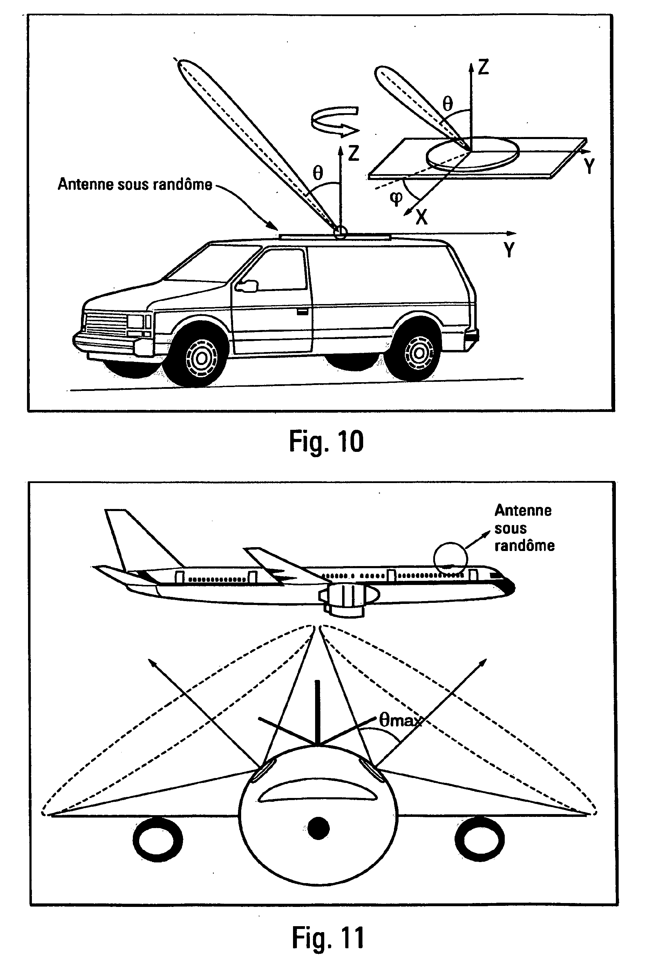

> ➢ La figure 1 le schéma de principe du système de dépointage selon l'invention,
> ➢ La figure 2 un organigramme des différentes étapes mises en oeuvre,
> ➢ La figure 3 un schéma de principe du dépointage électrique 1 D,
> ➢ La figure 4 un schéma expliquant le dépointage mécanique 1D-électrique 1 D,
> ➢ La figure 5 une variante de réalisation de la figure 4,
> ➢ Les figures 6 et 7 deux illustrations de l'intérêt de la double polarisation utilisée,
> ➢ La figure 8 un premier exemple de combineur de polarisation analogique,
> ➢ La figure 9 un deuxième exemple de combineur de polarisation numérique,
> ➢ Les figures 10 et 11 deux exemples d'installation du système selon l'invention sur des mobiles.

Le système selon l'invention est représenté par exemple au moyen du schéma de principe de la figure 1 où l'antenne est montée par exemple sur un véhicule mobile en communication avec un satellite non représenté pour des raisons de clarté. Le satellite émet un signal ayant une polarisation quelconque.

Le système comporte une antenne double polarisation 1 à déphasage 1 D, en liaison avec un positionneur 2 mécanique 1D dont le rôle est de positionner l'antenne mécaniquement. Le positionneur mécanique est par exemple un axe associé à un moteur avec engrenage permettant de faire tourner l'antenne et la mettre dans une position souhaitée. Un bloc de commande 3 des déphaseurs $11_m$ de l'antenne (figure 3) permet de faire varier la phase des différents éléments d'antenne. Un combineur de polarisation 4 a notamment pour fonction de combiner les deux signaux H et V obtenus sur les deux voies de sortie de l'antenne 1 (correspondant à une décomposition sur deux axes orthogonaux ou sensiblement orthogonaux du signal reçu par l'antenne double polarisation). Le combineur 4 est adapté pour obtenir un bilan de liaison optimisé entre le mobile et le satellite en recombinant les signaux H et V. Une centrale inertielle 5 permet d'obtenir les informations GPS de positionnement du satellite et du mobile par exemple. On dispose donc de leurs coordonnées x, y, z dans un repère à trois dimensions. Un dispositif 6 de dépointage ou pointage du faisceau reçoit une partie au moins du signal issu du combineur de polarisation ainsi que les informations de position (par exemple les coordonnées du satellite et du mobile dans un repère trois dimensions, la valeur de l'angle du positionneur, la valeur des déphaseurs). Ce dispositif de dépointage a notamment pour fonction de permettre le pointage du faisceau de l'antenne en direction du satellite en temps réel. Il permet notamment une compensation automatique du mouvement du satellite ou de l'objet mobile pour pointer le faisceau.

Les étapes du procédé mises en oeuvre sont par exemple les suivantes:

1 - recueillir les informations concernant la position du satellite et celle du mobile équipé de l'antenne, par exemple au moyen de la centrale d'inertie,

2 - transmettre ces informations GPS au dispositif de pointage de faisceau qui agit sur le positionneur et les commandes des déphaseurs pour:

➢ pointer le faisceau de l'antenne en direction du satellite, (dépointage mécanique),
➢ commander les déphaseurs, (dépointage électronique),
afin que l'antenne pointe sur le satellite,

3 - le signal émis par le satellite ayant une polarisation quelconque, l'antenne reçoit ce signal et la décompose en deux signaux H et V ayant des polarisations sensiblement orthogonales, ou orthogonales,

4 - transmettre ces deux signaux H et V au combiner de polarisation 4 qui les combine de façon telle que le bilan de liaison entre l'antenne et le satellite soit optimisé. La combinaison est réalisée par exemple en optimisant le bilan de liaison : un critère pouvant être la valeur du rapport S/B,

5 - transmettre une partie au moins de ce signal optimisé vers le dispositif de pointage de faisceau. Ce dernier compare par exemple l'amplitude du signal à un niveau de seuil fixé préalablement afin de vérifier l'état de la liaison entre les 2 objets. Tout autre paramètre représentatif de l'état de la liaison peut être utilisé comme valeur seuil. Pour prélever une partie du signal de sortie du combiner, on utilise par exemple un coupleur directif pour l'envoyer vers le système de dépointage et obtenir une correction de pointage en temps réel, par exemple.

L'antenne 10 (figure 3) est par exemple une antenne plane bipolarisation pouvant être dépointée électriquement selon un axe au moyen des commandes des déphaseurs $11_m$.

La figure 3 représente le principe du dépointage électrique 1D. Dans cet exemple, l'antenne dépointe suivant le plan Oyz dans le sens des lignes du réseau entre [-θmax, +θmax]. L'angle maximal est défini par un gain minimal ou un niveau de lobes à garantir.

L'antenne 10 se présente comme un réseau plan d'éléments rayonnants $10_{nm}$ distribués sous la forme de n lignes In et de m colonnes Cm. Chaque colonne est par exemple reliée à un module électronique (déphaseur) $11_m$ permettant de faire varier la phase de chacun des éléments rayonnants $10_{nm}$. Dans cet exemple, m modules électroniques permettent de déphaser les éléments, contre n*m pour un déphasage électrique 2 axes ou 2D. Ceci simplifie considérablement l'électronique.

La figure 4 schématise l'association du dépointage mécanique 1D et du dépointage électrique 1D.

L'antenne 12 à dépointage électronique donnée en exemple est disposée à plat sur un positionneur 13 un axe, dont le centre coïncide avec le centre de phase des courants et le centre d'inertie de l'antenne. L'antenne est généralement homogène. L'antenne a une forme circulaire ou sensiblement circulaire et possède n lignes et m colonnes. Le nombre de colonnes est différent en fonction de la position de la ligne.

En faisant tourner le positionneur 13 autour de son axe sur 360°, l'antenne est ainsi capable d'éclairer un cône 14 d'angle θmax. On recrée ainsi un balayage 2D.

De cette façon, les contraintes sur le positionneur sont beaucoup moins sévères que dans le cas d'une antenne avec dépointage mécanique 2 axes, d'autant plus que l'antenne plane est généralement relativement légère et homogène avec une surface d'appui importante sur le positionneur.

Ceci permet d'avoir un système à dépointage 2D à un coût intéressant avec une bonne fiabilité. Les contraintes sur la partie mécanique sont légères et les commandes électroniques relativement peu nombreuses.

La figure 5 représente une variante mieux adaptée pour couvrir des angles rasants, sous réserve que l'antenne présente de faibles dimensions pour ne pas imposer des contraintes importantes sur le positionneur.

L'antenne 15 à dépointage électronique 1D est un réseau d'éléments rayonnants $15_{nm}$ ayant une forme rectangulaire et comportant n lignes et m colonnes. Le plan de l'antenne fait un angle γ donné par rapport au plan du positionneur. Le cône d'éclairement obtenu par le mouvement de rotation est référencé 17.

La figure 6 schématise les deux polarisations orthogonales Ev et Eh (antenne bipolarisation H et V) obtenues sur les deux sorties de l'antenne. En combinant linéairement les deux polarisations dans le combiner de polarisation, selon un algorithme donné, on est alors capable de décrire tout le plan de polarisation ou au moins sa majorité. Cette combinaison linéaire est donnée par la relation suivante :

$$E = \alpha E_h + \beta E_v \quad (\alpha, \beta \text{ complexes})$$

L'idée est de recombiner ces valeurs Ev et Eh pour obtenir la polarisation du signal émis par le satellite 19.

Ce système est bien adapté pour des véhicules mobiles en liaison ou à mettre en liaison avec des satellites ou des objets aériens à défilement lent qui peuvent émettre indifféremment en polarisation linéaire verticale, linéaire horizontale, circulaire droite et circulaire gauche, voire elliptique.

La figure 7 schématise la manière de compenser l'inclinaison du véhicule mobile sur lequel est positionnée l'antenne ou du plan de polarisation du satellite ou de l'objet aérien dans le cas de liaisons en polarisation linéaire. S'il n'y a pas compensation, il existe un risque de dégradation de la liaison, voire la rupture de la liaison.

Dans cet exemple, le plan de polarisation Ea d'une antenne 16 placée sur un véhicule non représenté pour des soucis de simplification est incliné d'un angle $\phi$ par rapport à la verticale et d'un angle $\theta$ par rapport à l'horizontal. Le plan de polarisation Es du signal satellite est incliné d'un angle $\alpha$ par rapport à la verticale. Les deux plans de polarisation font entre eux un angle $\phi + \alpha$, ce qui engendre des pertes de dépolarisation et peut conduire à une absence ou une perte de liaison, si la somme des angles $\phi + \alpha$ est égale à 90°.

Le combineur de polarisation effectue alors un traitement sur chaque voie H et V afin de recréer en temps réel le vecteur Es correspondant au vecteur de polarisation émis par le satellite. Le bilan de liaison entre le mobile et le satellite est ainsi optimisé.

Outre le fait de garantir des bilans de liaison stables ou sensiblement stables lorsque le véhicule est incliné et que le satellite (ou objet aérien) se trouve dans le cône d'éclairement, ce système permet de recevoir deux polarisations orthogonales (ou sensiblement orthogonales) simultanément par traitement de signal sur différents sous-canaux.

Le traitement des voies H et V est réalisé par exemple au moyen d'un combineur de polarisation, dont deux exemples de réalisation sont donnés aux figures 8 et 9.

Le combineur est un dispositif de traitement adapté à optimiser le bilan de liaison entre le mobile et le satellite, en temps réel et qui ajuste les coefficients en amplitude et en phase d'un combineur classique.

La figure 8 représente un combineur de type analogique. Selon le schéma, les deux signaux H et V issus de l'antenne sont transmis au combineur de polarisation. Ce dernier comporte une partie comprenant deux voies en parallèle comprenant chacune un amplificateur 20 suivi d'un déphaseur 21 et un additionneur 22. Les deux voies produisent un signal E égal à $V + ae^{j\phi}H$ et un signal complémentaire E* égal à $H + b e^{j\tau}V$. Le signal E est ensuite renvoyé vers le bloc de traitement 23. Ce bloc a notamment pour fonction de vérifier si le signal combiné E est optimal, par exemple en comparant la valeur du rapport signal/bruit à une valeur seuil. Tout autre paramètre représentatif du bilan de liaison peut être utilisé pour chercher le signal optimal. Le signal E est envoyé au dispositif de traitement jusqu'à trouver une valeur optimale, correspondant à un bilan de liaison optimal.

Cette manière de procéder offre notamment les avantages suivants:

➢ Il évite un calibrage fastidieux et coûteux de l'ensemble constitué de l'antenne des voies H et V et du combineur de polarisation,

➢ On est capable de synthétiser n'importe quelle polarisation et de ce fait on n'a théoriquement aucune dégradation de liaison lorsque le véhicule ou le plan de polarisation de l'objet aérien est incliné.

Cette solution du combineur de polarisation analogique est efficace sur une bande relativement étroite car les coefficients appliqués sont valables pour toute la bande de signal et nécessite une conversion analogique-numérique et numérique-analogique qui n'est réalisable facilement en l'état de l'art actuel sur des bandes relativement étroites.

Selon une autre variante donnée à la figure 9, il est possible de l'élargir à un nombre donné de sous-canaux en numérisant le signal sur chaque sous-canal par filtrage. Le système permet de fournir 2*n signaux simultanément et une seule conversion analogique-numérique par sous-canal suffit.

Le signal H est réparti vers n sous-canaux 24i au moyen de filtres adaptés en liaison avec un CAN 25i. Les CAN 25i sont reliés au dispositif de traitement de signal TSi.

Le signal V est lui-même réparti en n sous-canaux 26i et en n CAN 27i. Les différents sous-signaux sont alors transmis au dispositif de traitement de signal TSi.

Le nombre de dispositif de traitement de signal TSi est égal à la moitié du nombre de sous-canaux par exemple, sachant que un signal Hi et un signal Vi sont transmis au même dispositif de traitement de signal TSi afin de produire un signal optimum Ei.

La figure 10 représente un système selon l'invention installé sur un véhicule automobile, ce dernier étant en liaison avec un satellite par exemple.

La figure 11 représente une variante ou deux systèmes selon l'invention sont disposés de part et d'autre d'un avion. L'avion est en liaison avec un satellite ou un autre avion ou encore un objet céleste, le déplacement et les mouvements de chacun étant suffisamment lents.

La description a été donnée à titre illustratif et non limitatif dans le cas d'une liaison entre une antenne disposée sur un véhicule mobile et un satellite.

Elle s'applique dans le cas de liaisons entre antennes et un objet aérien ou un objet céleste géostationnaire ou encor un objet à défilement lent.

**Revendications**

1. Système antennaire permettant la liaison entre un objet aérien émettant un signal de polarisation quelconque et un mobile équipé d'une antenne double polarisation (1), ledit système comportant au moins un dispositif de détermination de la position du mobile et de l'objet aérien, et un ensemble de positionnement de ladite antenne, ledit système étant **ca-**

**ractérisé en ce qu'**il comporte au moins :

> ➢ un combineur de polarisation (4) recevant deux signaux H et V issus de ladite antenne double polarisation (1), les signaux H et V résultant du signal issu de l'objet aérien,
> ➢ le combineur de polarisation (4) étant adapté à recombiner les signaux H et V afin d'obtenir un signal optimisant le bilan de liaison entre le mobile et l'objet aérien.

2. Système selon la revendication 1 **caractérisé en ce que** ledit ensemble de positionnement de ladite antenne comporte au moins un positionneur mécanique (2) en liaison avec l'antenne (1), un bloc de commande (3) des déphaseurs de l'antenne, un dispositif de dépointage (6) de l'antenne.

3. Système selon la revendication 1 **caractérisé en ce que** l'antenne est de forme circulaire ou rectangulaire et montée sur un positionneur 1 axe.

4. Système selon l'une des revendications 1 à 3 **caractérisé en ce que** ledit combineur de polarisation est de type analogique.

5. Système selon l'une des revendications 1 à 3 **caractérisé en ce que** ledit combineur de polarisation est de type numérique et chaque signal est divisé en plusieurs sous-canaux.

6. Procédé pour optimiser le bilan de liaison entre une antenne double polarisation associée à un mobile et un objet aérien émettant un signal de polarisation quelconque comportant une étape de détermination des positions du mobile et de l'objet aérien, **caractérisé en ce qu'**il comporte au moins les étapes suivantes :

> • à partir de la valeur desdites positions, positionner de manière mécanique et électronique l'antenne,
> • transmettre les deux signaux H et V issus de l'antenne vers une étape de combinaison adaptée pour produire un signal E correspondant à un bilan liaison optimal entre le mobile et l'objet aérien,
> • prélever une partie de ce signal et la comparer à un seuil.

7. Procédé selon la revendication 6 **caractérisé en ce que** l'on compare la valeur de l'amplitude du signal prélevé à une valeur seuil et on repositionne l'antenne si la valeur de l'amplitude est inférieure à une valeur donnée.

8. Utilisation du système selon l'une des revendications 1 à 5 pour un véhicule automobile en liaison avec un satellite ou un avion en liaison avec un autre avion ou un satellite.

**Claims**

1. Antennal system allowing the link between an aerial object emitting an arbitrary polarization signal and a craft equipped with a dual-polarization antenna (1), the system comprising at least one device for determining the position of the craft and of the aerial object, and an assembly for positioning the said antenna, the said system being **characterized in that** it comprises at least:

> • one polarization combiner (4) receiving two signals H and V coming from the said dual-polarization antenna (1), the signals H and V resulting from the signal coming from the aerial object,
> • the polarization combiner (4) being adapted for recombining the signals H and V so as to obtain a signal optimizing the link budget between the craft and the aerial object.

2. System according to Claim 1, **characterized in that** the said assembly for positioning the said antenna comprises at least one mechanical positioner (2) linked with the antenna (1), a control block (3) for the phase shifters of the antenna, an off-boresighting device (6) for the antenna.

3. System according to Claim 1, **characterized in that** the antenna is of circular or rectangular form and mounted on a 1-axis positioner.

4. System according to one of Claims 1 to 3, **characterized in that** the said polarization combiner is of analogue type.

5. System according to one of Claims 1 to 3, **characterized in that** the said polarization combiner is of digital type and each signal is divided into several sub-channels.

6. Method for optimizing the link budget between a dual-polarization antenna associated with a craft and an aerial object emitting an arbitrary polarization signal comprising a step of determining the positions of the craft and of the aerial object, **characterized in that** it comprises at least the following steps:

> • positioning the antenna in a mechanical and electronic manner on the basis of the value of the said positions,
> • transmitting the two signals H and V coming from the antenna to a combining step adapted for producing a signal E corresponding to an optimal link budget between the craft and the aerial object,
• taking off a part of this signal and comparing it with a threshold.

7. Method according to Claim 6, **characterized in that** the value of the amplitude of the signal tapped off is compared with a threshold value and the antenna is repositioned if the value of the amplitude is below a given value.

8. Use of the system according to one of Claims 1 to 5 for a motor vehicle linked with a satellite or an aeroplane linked with another aeroplane or a satellite.

**Patentansprüche**

1. Antennensystem, das das Verbinden zwischen einem oberirdischen Objekt, das ein beliebiges Polarisationssignal sendet, und einem mobilen Gerät, das mit einer Doppelpolarisationsantenne (1) ausgestattet ist, erlaubt, wobei das System mindestens eine Vorrichtung zum Bestimmen der Position des mobilen Geräts und des oberirdischen Elements und eine Einheit zum Positionieren der Antenne aufweist, wobei das System **dadurch gekennzeichnet ist, dass** es mindestens Folgendes aufweist:

   ➢ einen Polarisationskoppler (4), der zwei Signale, H und V, empfängt, die von der Doppelpolarisationsantenne (1) stammen, wobei die Signale H und V aus dem Signal, das aus dem oberirdischen Objekt stammt, resultieren,
   ➢ wobei der Polarisationskoppler (4) geeignet ist, die Signale H und V zu rekombinieren, um ein Signal zu erzielen, das die Verbindungsbilanz zwischen dem mobilen Gerät und dem oberirdischen Objekt optimiert.

2. System nach Anspruch 1, **dadurch gekennzeichnet, dass** die Positionierungseinheit der Antenne mindestens einen mechanischen Positionierer (2) in Verbindung mit der Antenne (1), einen Steuerblock (3) der Antennenphasenschieber, eine Vorrichtung zur Störimpulsbeseitigung (6) der Antenne aufweist.

3. System nach Anspruch 1, **dadurch gekennzeichnet, dass** die Antenne kreisförmige oder rechteckige Form hat und auf einen 1-Achsen-Positionierer montiert ist.

4. System nach einem der Ansprüche 1 bis 3, **dadurch gekennzeichnet, dass** der Polarisationskoppler vom analogen Typ ist.

5. System nach einem der Ansprüche 1 bis 3, **dadurch gekennzeichnet, dass** der Polarisationskoppler vom digitalen Typ ist und dass jedes Signal in mehrere Unterkanäle geteilt ist.

6. Verfahren zum Optimieren der Verbindungsbilanz zwischen einer Doppelpolarisationsantenne, die mit einem mobilen Gerät verbunden ist, und einem oberirdischen Objekt, das ein beliebiges Polarisationssignal sendet, das einen Schritt des Bestimmens der Position des mobilen Geräts und des oberirdischen Objekts aufweist, **dadurch gekennzeichnet, dass** es mindestens die folgenden Schritte aufweist:

   • ausgehend von dem Wert der Positionen, mechanisches und elektronisches Positionieren der Antenne,
   • Übertragen der zwei Signale H und V, die aus der Antenne stammen, zu einem Kombinationsschritt, der ein Signal E erzeugen kann, das einer optimalen Verbindungsbilanz zwischen dem mobilen Gerät und dem oberirdischen Objekt entspricht,
   • Entnehmen eines Teils dieses Signals und sein Vergleichen mit einem Schwellenwert.

7. Verfahren nach Anspruch 6, **dadurch gekennzeichnet, dass** man den Wert der Amplitude des entnommenen Signals mit einem Schwellenwert vergleicht und die Antenne neu positioniert, wenn der Wert der Amplitude kleiner ist als ein gegebener Wert.

8. Einsatz des Systems nach einem der Ansprüche 1 bis 5 für ein Kraftfahrzeug in Verbindung mit einem Satelliten oder für ein Flugzeug in Verbindung mit einem anderen Flugzeug oder einem Satelliten.

**Fig. 1**

**Fig. 3**

```
┌─────────────────────────────┐
│ Déterminer les positions dans │
│ l'espace du mobile comportant │──── 1
│ l'antenne et l'objet celeste  │
└─────────────────────────────┘
              │
              ▼
┌─────────────────────────────┐
│ Pointer le faisceau de l'antenne │
│ sur l'objet à l'aide des      │
│ informations précédentes      │──── 2
│ Mécanique 1D et électronique 1D │
└─────────────────────────────┘
              │
              ▼
┌─────────────────────────────┐
│ Combiner les deux signaux H et V │
│ pour optimiser le bilan de liaison │──── 4
│ entre le mobile et le satellite │
└─────────────────────────────┘
              │
              ▼
┌─────────────────────────────┐
│ Dériver une partie du signal E │
│ optimisé et le comparer à une │──── 5
│ valeur seuil                  │
└─────────────────────────────┘
              │
              ▼
          ◇─────────◇
         ╱ Amplitude de E ╲
         ╲ >au seuil     ╱
          ◇─────────◇
              │
              ▼
┌─────────────────────────────┐
│ Non - on repositionne l'antenne │
│ Oui - on continue             │
└─────────────────────────────┘
```

## Fig. 2

Fig. 4

Fig. 5

**Fig. 6**

**Fig. 7**

Fig. 8

Fig. 9

**Fig. 10**

**Fig. 11**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6275187 B
- US 5678171 A